# EUROPEAN PATENT SPECIFICATION

(11) **EP 3 257 794 B1**
(45) Date of publication and mention of the grant of the patent: **08.09.2021**
(21) Application number: 16382269.5
(22) Date of filing: 13.06.2016
(51) Int. Cl.: B65G 49/06, C03B 33/03

(54) **GLASS PROCESSING TABLE WITH SEPARATE LOADING AND PROCESSING AREAS**
GLASVERARBEITUNGSTISCH MIT SEPARATEN LADE- UND VERARBEITUNGSBEREICHEN
TABLE DE TRAITEMENT DE VERRE COMPORTANT DES ZONES DE CHARGEMENT ET DE TRAITEMENT

(43) Date of publication of application: 20.12.2017
(73) Proprietor: Turomas SL, 44415 Rubielos de Mora Teruel (ES)
(72) Inventor: Tomás Martin, Miguel, 44415 Rubielos De Mora (ES)
(74) Representative: Nederlandsch Octrooibureau

(56) References cited:
- EP-A1- 2 113 492
- EP-A1- 2 275 388
- EP-A1- 2 518 029
- JP-A- H04 342 431
- US-A1- 2005 279 199

## Description

### SUBJECT MATTER OF THE INVENTION

The present invention relates to a glass processing table with separate loading and processing areas, and is meant to allow loading and positioning a glass plate on the table while another plate is being processed on the same table.

### BACKGROUND OF THE INVENTION

There are markets in which there is a growing demand for monolithic glass processing solutions that are more automated and guarantee greater productivity. Among these automated lines, an important role is played by cutting machines. These machines are characterised by incorporating systems for loading the glass on their surface. There are various loading systems: belts, table tilting, arms, etc. The productivity of the table will be higher or lower and the design of the line as a whole will be different depending on which system is used. Some of the different possible lines that may be designed depending on the loading system of the cutting table will be described below. In loading by tilting of the cutting table, the table rises until it is vertical (perpendicular to the floor) in order to load the glass. In this position the glass can be loaded by clamps, suction cups or an overhead loader that brings it near the surface of the table. When the glass is resting on the load support points that protrude from the table surface, the table returns to the horizontal position. If the glass is not correctly positioned on the surface of the table after loading, it can be positioned manually with the aid of an air cushion. There are also tables incorporating belts for positioning the glass on the surface of the table. Tilting is a somewhat slower method than the others, as the table cannot be turned too quickly due to its weight with the glass plate on it. In addition, the plate can be evacuated manually or by tilting the table again, but until the first plate has not finished being evacuated it is not possible to start loading the next one.

Another loading system uses tilting arms. In this system the glass is loaded using arms provided on the table surface that tilt to a vertical position. The plate is then placed on the load support points using clamps, suction cups or manually.
When the glass is positioned in the arms, the arms are lowered again to the surface of the table. If the glass is not correctly positioned on the surface of the table after loading, it can be positioned manually with the aid of an air cushion. In some tables clamps are incorporated on the bridge that carry the glass automatically to the cutting position. This system is not very productive as the glass must be placed in the arms manually. In addition, until the first glass has been cut and evacuated it is not possible to load the next one. Loading by arms with suction cups: the system is similar to the previous one, with arms on the table surface that tilt to a vertical position. The difference is that suction cups are used, so that the glass on a rack can be gripped automatically. In addition, while the first glass is being cut the next one can be ready. However, the loading of the next glass cannot start until the current glass plate has been evacuated. The glass is placed on the table using clamps on the bridge that carry it to the cutting area automatically.

In glass loading systems using belts, a set of belts is provided on the table that allow moving the glass along the table surface to the cutting position. Machines with belts generally work together with an overhead loader that places the plate on a tilting table placed before the cutting table. This table has rollers that move the glass forward until meeting the belts of the cutting machine. With this system it is possible while the first plate is being evacuated to start loading the next one, so that the lines using belts for transportation are more productive and efficient. However, as indicated above an additional tilting table is needed that will have the next glass plate to be processed ready. This table occupies space and has a cost that increases that of the line as a whole.

EP 2 113 492 A1 discloses a machine for cutting glass panes comprising a supporting frame, a worktable on which at least one cutting assembly works, the machine further comprising a grip element and an engagement element which can be coupled on two points of a pane or pane portion to be turned, means for the translational motion of the grip element and means for the translational motion of the engagement element being also provided which act along two mutually intersecting directions.

US 2005/279199 A1 discloses a method for loading and cutting glass sheets on cutting tables, comprising providing, by means of a scoring head, scoring lines on a sheet of glass; extracting, during scoring, the sucker-fitted pick-up arms from below the sheet being worked; tilting the pick-up arms so as to place the suckers on the sheet to be picked up, which is arranged substantially vertically; picking up the sheet, starting to tilt it toward the cutting table during the scoring of the sheet; moving the scored sheet away from the cutting table; positioning the scoring head beyond the sheet supporting region, on the opposite side with respect to the pick-up region; and positioning the sheet on the cutting table.

### DESCRIPTION OF THE INVENTION

In order to reduce or even eliminate all or some of the aforementioned drawbacks, a table for loading and processing glass plates is disclosed comprising a surface for supporting glass plates in a horizontal position, provided with a loading area and a processing area, a system for loading glass plates that receives the glass plate from outside the table and deposits the glass plate in a horizontal position on the loading area, a system for transporting glass plates that moves a glass plate from the loading area to the processing area, a glass plate processing system that processes a glass plate in the processing area and a system for evacuating glass plates for evacuating a glass plate from the table after passing through the processing area. In this way it is possible to load on the same table a second plate in a horizontal position on the loading area while a first plate is being cut in the processing area. In this way a second glass plate will be ready on the table surface to be cut when necessary. As the table has a loading area and a processing area, a second plate can be placed in the processing position simultaneously to the evacuation of a first plate that has been processed. In this way, the total length of the processing line can be reduced, providing a highly productive line without increasing costs or space. The processing rate can be very high and performed in a small space. The claimed table allows having the next plate ready and placing it in a horizontal position while the first one is being processed. The loading and transportation systems can be configured such that they do not interfere with each other, so that loading of a glass plate in the loading area can begin while another glass plate is being transported from the loading area to the processing area. The loading area can be designed to support two glass plates in a horizontal position at the same time. Thus, two glass plates will be ready on the table for processing. The loading area can be designed to support any other number of glass plates. The transportation system in this case can be designed to displace a first glass plate loaded in the loading area from a first position to a second position, such that a second glass plate can be loaded in the first position while the first glass plate is still in the loading area. The transportation system can move a glass plate from the first or second position of the loading area to the processing area. The transportation system may be designed to move a glass plate from any position in the loading area to any other position of the loading area. The transportation system may be designed to move a glass plate from any position in the loading area to the processing area. The table surface can also comprise an unloading area. The table surface can also comprise other areas. The evacuation system can be located in the unloading area. The loading area can be designed to be used also as a processing area. The loading area can comprise a processing system that can be the same system placed in the processing area or a different one. A glass plate can be processed in a first manner at the loading area, carried by the transportation system to the processing area and processed there in a second manner. For example, the loading area can be used to cut glass plates and the processing area can be used to separate glass plates. In this way the table may comprise more than one processing system, where one of the processing systems is restricted to the loading area and another of the processing systems is restricted to the processing area. The glass plate processing system can process a glass plate with a length up to a maximum length, where the loading area can have a length equal to or greater than the maximum length and the processing area can have a length equal to or greater than the maximum length. In this way a plate with a maximum size can be loaded and processed at the same time. The loading area can have a length equal to that of the processing area. The loading area can also have a length greater than or smaller than that of the processing area. The processing area and the loading area can respectively have any length allowing to load a glass plate horizontally in the loading area while another glass plate is being processed in the processing area.

A table as per the invention is defined in claim 1 and a method as per the invention is defined in claim 12. Preferred embodiments of the invention are further defined in dependent claims 2-11.

The table can have a total length of 1 and the loading area can have a length equal to or greater than one third of the total length 1 of the table. The loading area can have a length equal to or greater than one fourth of the length of the table. The processing area can also have a length equal to or greater than one third of the total length 1 of the table or equal to or greater than one fourth of the total length of the table. The loading area can also have a length equal to or greater than two thirds of the total length 1 of the table. The lengths of the loading area and of the processing area can have any relation to the total length 1 of the table that allows performing their loading and processing functions.

The length of the table can be equal to or longer than 6 metres. This is a suitable size for simultaneously loading and processing glass plates of approximately 3 metres in length. The table can also have a length greater than 5 metres. The table can also have a length greater than 8 metres. The table can have any length allowing to perform loading and processing functions simultaneously.

The transportation system can also be the evacuation system. This is an efficient implementation of the evacuation of glass plates from the table. The evacuation system can also be a system completely or partially independent of the transportation system. For example, the transportation system can carry the glass plate from the processing area to an unloading area and an evacuation system in the unloading area can evacuate the glass plate from the unloading area out of the table.

The glass plate loading system can be designed to receive glass plates in a vertical position and rotate them into a horizontal position in the loading area. The vertical position is not limited to the plate forming a right angle to the surface of the table. This vertical position can include angles of more or less than 90 degrees. Similarly, the horizontal position is not limited to the glass plate being at 180 degrees to the surface of the table. The horizontal position can include angles of more or less than 180 degrees. The loading system can be designed to receive glass plates in any position. For example, the loading system can be designed to receive glass plates in a vertical position.

The processing system can comprise a mobile processing head that can move along the length and width of the table, and the processing area can be defined as the area in which the processing head can move. The processing system can also include marking, stripping, separating or any other process that can be performed on the glass plate on the table.

The mobile processing head can be mounted on a mobile bridge that spans the width of the table and can move a certain distance along the table. In this way, the processing head can easily reach the entire processing area that includes an area with the same width as the table and the length that the bridge can move. The mobile processing head can be mounted in any other manner allowing its function to be carried out and the entire processing area to be reached. The processing and loading table can comprise a stopping system designed to limit the movement of the mobile bridge along the surface of the table. In this way, the processing system may be restricted to the processing area, as stated above, and a second processing can be performed in the loading area, without the movement of the processing head interfering with the second processing or potentially being hazardous. In an alternative design, the stopping system can restrict the processing limit to the loading area and a second processing can be performed in the processing system. Similarly, the stopping system may be configured to allow the bridge to move along the entire table. This allows using the loading area and the processing area for a single processing. For example, it could be possible to process glass plates with the same length as the table. The stopping system can comprise stops. These stops can be placed at the sides of the table. The stops may be adjustable, such that they can be placed in different positions so that the longitudinal distance that the bridge can travel along the table will depend on the position selected for the stops. The stops can be made of plastic or any other suitable material. The stopping system can also comprise a sensor. The sensor can be configured to detect the position of the processing bridge on the table surface. The stopping system can also comprise a control unit. The control unit can be configured to receive a signal from the sensor. The signal received can represent the position of the processing bridge on the table surface. The control unit can be configured to control the movement of the bridge depending on the signal received from the sensor. For example, the control unit can be configured to slow down or stop the movement of the processing bridge along the table surface depending on the signal received. In this way, the control unit can send a signal to stop the processing bridge if it detects that the bridge is in the middle of the table surface, at the end of the table surface, or at any other position. The sensor can include a metal plate located at the surface of the table and an inductor at the processing bridge, such that the inductor detects the metal plate and sends a signal to the control unit at that time. In this way, the control unit can detect that the bridge has reached a specific position above the surface of the table and can control its movement according to this position. The metal plate can be located at the side of the table. The metal plate may be adjustable such that the metal plate can be placed at different positions, and therefore the longitudinal distance detectable along the table changes depending on the position of the metal plate. In this way, the metal plate can be placed at the appropriate position to limit the movement of the mobile bridge along the surface of the table. For example, the metal plate can be placed at the midpoint of the table, or at the end thereof. The metal plate can be configured to be placed at any position where one wishes to limit the movement of the processing bridge. The stopping system can comprise a second metal plate placed on the surface of the table and a second inductor on the processing bridge. In this way, a second position of the processing bridge on the table surface can be detected. The control unit can be configured to slow down or stop the movement of the processing bridge when the latter is at the second position. Thus, the control unit can be configured to detect two different positions of the processing bridge. For example, the control unit can slow down the processing bridge when it reaches a first position and stop the processing bridge when it reaches a second position. Instead of a metal plate and an inductor, the sensor can comprise any other type of element that allows detecting the position of the processing bridge on the table. The table can comprise any other type of stopping system or any combination of various types of stopping systems. For example, the table can comprise plastic stops and a stopping device comprising a sensor and a control unit as those described above. The movement of the processing bridge along the table surface can also be limited in any other way. For example, when the processing bridge comprises a linear motor and the table surface comprises magnets, such that the processing bridge can move along the surface of the table using the linear motor and the magnets, one or more of these magnets could be removed from the table to limit the movement of the processing bridge as desired.

The glass plate loading system can comprise a tilting arm for loading a glass plate in the loading area where the tilting arm can turn between a first position in which the tilting arm is at a vertical position to receive a glass plate, and a second position where the tilting arm is at a horizontal position to deposit a glass plate on the loading area. In this way, the table can be autonomous in the positioning of the glass plate in a horizontal position without requiring an additional tilting table, and can automatically evacuate the glass plate at the same time as the next glass plate is placed in the cutting area. The loading system can comprise any number of arms. The arms can tilt independently or in a coordinated manner. For example, some of the arms can remain horizontal while the rest tilt. For example, two arms can tilt and not the rest, or one arm can remain horizontal and the rest can tilt to receive a glass plate. This is an efficient way to load the glass plates in the table loading area. The number of arms can depend on the dimensions of the larger glass plate than the loading system is able to load. Specifically, the number of arms can depend on the dimensions of the largest glass plate the loading system is able to load. For example, the greater the width of the glass plate, the greater the number of arms can be. The loading system can comprise any other element that allows placing a plate in a horizontal position on the loading area. For example, the loading system can comprise rollers capable of receiving a glass plate in the horizontal position and moving it to the loading area. The loading system can also be configured to receive the glass plate from an external overhead loader or from any other type of loader or device. The loading system can be configured to receive the glass plate in any manner that does not interfere with the processing system. That is, such that simultaneous loading and processing of glass plates is possible in the system. The surface of the table can comprise longitudinal grooves starting at the end of the table from where the loading is performed and coinciding with the positions of the arms, such that the arms can tilt to a horizontal position in which they are concealed under the surface of the table.

The tilting arm can comprise a suction cup for holding a glass plate and loading it in the loading area. This facilitates loading of glass plates from outside. The tilting arm can comprise any number of suction cups appropriate for holding a glass plate. The number of suction cups can be a function of the width or length of the largest glass plate that can be loaded. The tilting arm can also comprise removable support points on the lower part of the arm to load or unload a glass plate. For example, the removable support points can be used to load or unload a glass plate that cannot be gripped by the suction cups due to its size. The removable support points can also be used to load or unload a glass plate manually. The arm can comprise any other support system that allows holding the glass plate until it is horizontal on the loading area. The table can comprise on its surface openings located at the grooves in which the arms are concealed and coinciding with the position of the suction cups when the arm is in a horizontal position, such that the arms and suction cups are concealed under the table surface.

The glass plate loading system can comprise a hydraulic group for tilting the tilting arm between the first position and the second position, where in the second position the arm is concealed under the surface of the table. The hydraulic group can be located in any part of the system that allows it to perform its function. The loading system can comprise any other type of system. The loading system can be actuated in any other manner that allows performing the tilting motion. The loading system can also comprise one or several cylinders placed on any of the arms and the hydraulic group can exert its force on the cylinders to tilt the arms. The cylinders can be located in any other position. For example, the cylinders can be connected to a mechanical system that is in turn connected to the arms such that the mechanical system, due to the action of the cylinders, can make the arms tilt. Instead of the cylinders, any other similar element can be used. The loading system can comprise any other mechanical system that allows actuating the arms.

The glass plate transportation system can comprise a belt for transporting a glass plate from the loading area to the processing area. This is an efficient way to transfer the glass plates from the loading area to the processing area. The loading system can comprise any number of belts. The number of belts can depend on the dimensions of the largest glass plate that the loading system is able to load. For example, the number of belts in the system can depend on the dimensions of the largest glass plate that the loading system is able to load. Specifically, the greater the width of the glass plate, the greater the number of belts can be. The transportation system can be implemented in any other way that allows transporting a glass plate from the loading area to the processing area such that it does not interfere with the loading system. The belt can be placed such that it does not interfere with the loading system. For example if the loading system is composed of arms, the arms and belts can be placed on the table such that both are operative at the same time. For example, the belts can be located along the length of the table at positions that do not coincide with the positions at which the arms are joined to the table. In this way the arms can tilt without interfering with the belt.

The belt can comprise mechanical means to raise and lower the belt that moves between a position in which the belt is concealed under the surface of the table and one in which the belt is above the surface of the table. For example, the transportation system can comprise one or several pneumatic cylinders that move the belt up or down. The transport system can comprise any other type of cylinder. Instead of raising or lowering the belts, the surface of the table may move up or down to conceal or reveal the belts respectively. The transport system can comprise any other type of system that allows the belt to rise or descend with respect to the plane containing the belts. The surface of the table can comprise longitudinal grooves through which the belts can rise onto the surface of the table to contact a glass plate and transport it, and falling beneath the surface of the table so that the glass plate is in contact with the surface of the table. The grooves can be located in positions where the arms are not present. In this way, the loading and transportation systems can coexist in the table and provide their functionality, allowing simultaneous loading and processing of glass plates.

The glass plate transportation system can comprise a plurality of belts and a joining system to join all the belts such that when the mechanical means exert a force on the joining system the plurality of belts rises or falls together. For example, the belts can comprise a plate or any number of plates that keeps them together such that by exerting a force on the plates the belts rise or descend together. The belts can comprise any other joining system that allows them to perform their function. The plate can be placed on the bottom part of the belts with respect to the surface of the table, such that when the belts are concealed inside the surface of the table and the arms tilt to the horizontal position in which they are also concealed in the surface of the table, the plate will not be interposed in the path of the arms.

The glass plate transport system can comprise a plurality of belts, a shaft crossing the plurality of belts and a motor that exerts its force on the shaft such that the plurality of belts move in a synchronised and simultaneous manner to transport a glass sheet from the loading area to the processing area. The motor can be located in any part of the system that allows it to perform its function. The transport system can comprise any other type of mechanical system that allows moving the belts. The shaft can be placed on the bottom part of the belts with respect to the surface of the table, such that when the belts are concealed inside the surface of the table and the arms tilt to the horizontal position in which they are also concealed in the surface of the table, the shaft will not be interposed in the path of the arms.

The belts and arms can be arranged in alternating positions on the surface of the table. The arms and belts can be placed in different positions on the surface of the table, such that operation of one of these will not interfere with the operation of the others, allowing the simultaneous loading and processing of glass plates on the surface of the table. The arms and belts can be distributed in any manner appropriate for their operation.

Also disclosed is a system for loading and processing glass plates that can comprise a table for loading and processing glass plates and an external system for loading glass plates to provide a glass plate in a vertical position to the table's system for loading glass plates. The external loading system can be any type of glass plate loader that allows providing a glass plate to the table for loading and processing.

Also disclosed is a method for loading and processing glass plates on a table for loading and processing glass plates, which comprises a loading area and a processing area, comprising the following steps: loading a glass plate in a horizontal position on a loading area using a glass plate loading system, moving the glass plate from the loading area to a processing area using a glass plate transporting system, processing the glass plate using a glass plate processing system; and while the glass plate is being processed, loading a glass plate in a horizontal position in the loading area.

### BRIEF DESCRIPTION OF THE DRAWINGS

To complete the description being made and in order to aid towards a better understanding of the features of the invention, the present specification is accompanied by a set of drawings forming an integral part of the invention, where for purposes of illustration and in a non-limiting manner the following is shown:
- Figure 1: Schematic view of a glass processing table with separate loading and processing areas.
- Figure 2a: Schematic view of a loading system with arms and suction cups.
- Figure 2b: Schematic view of a transportation system using belts.
- Figure 3: Schematic view of a loading and transportation system consisting in the combination of the loading system with arms and suction cups of Figure 2a and the transportation system using belts of Figure 2b.
   Figure 4: View of a loading and processing table incorporating the system of Figure 3.
- Figures 5-8: Perspective side views of the processing table of Figure 4.
- Figures 9-10: Plan views of the processing table of Figure 4.

### DESCRIPTION OF THE PREFERRED EMBODIMENT

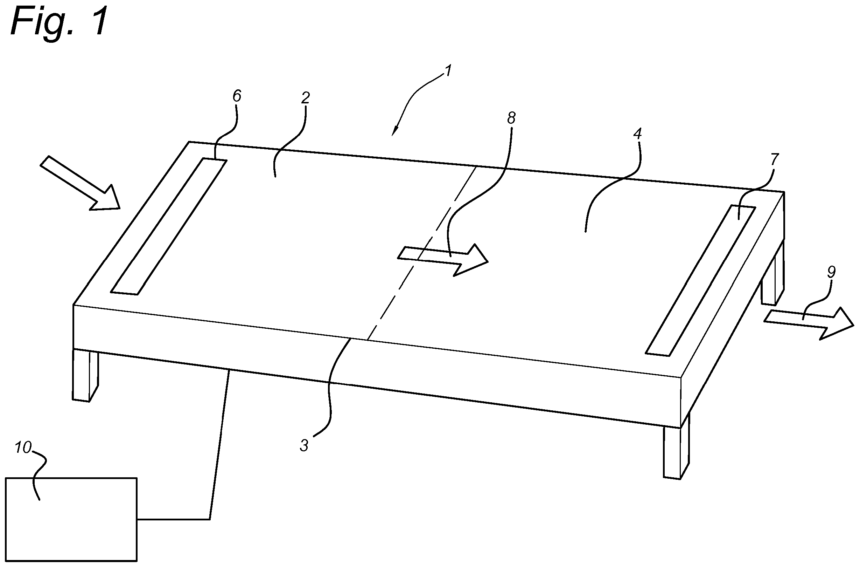

As indicated in the previous section the system consists in incorporating on the same surface of a processing table a loading area and a processing area. Figure 1 shows a schematic view of a glass processing table with a loading area and a processing area. The term table used in the claims and the description is non-limiting and refers to any element that can provide the same functions. Specifically, the term table can refer to any surface that can support glass plates for loading and processing. Figure 1 shows a table (1) for loading and processing glass plates that comprises a surface (3) for supporting glass plates in a horizontal position. The surface (3) of the table of Figure 1 comprises a loading area (2) and a processing area (4). The table of Figure 1 also comprises a system (6) for loading glass plates. The system (6) for loading glass plates is able to receive a glass plate from outside the table and deposit the glass plate received in a horizontal position in the loading area (2). The table of figure 1 comprises a system (8) for transporting glass plates that transports glass plates from the loading area (2) to the processing area (4). The table of Figure 1 also comprises a system (7) for processing glass plates that processes a glass plate in the processing area (4) and a system (9) for evacuating glass plates that evacuates a glass plate out of the table after passing through the processing table. The table of Figure 1 also comprises a control unit (10) configured to control the processing system.

The surface (3) has a length 1, measured in the direction of a longitudinal axis that crosses the table from the loading area (2) to the processing area (4). The table can process a glass plate with a maximum length. The loading area can have a length equal to or greater than this maximum length. The processing area can also have a length equal to or greater than the maximum length. The length of the loading area can be greater or equal to one third of the length 1 of the surface.

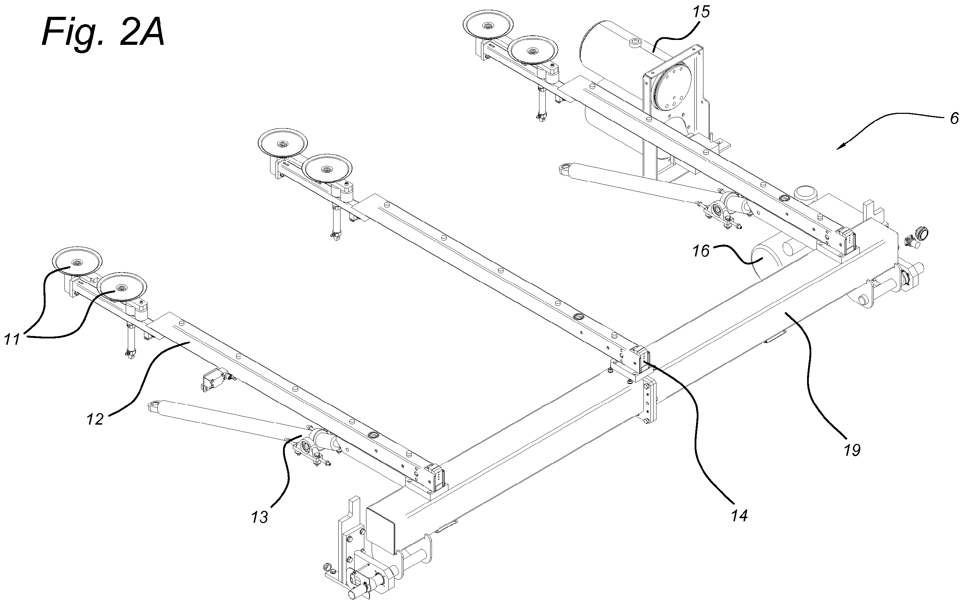

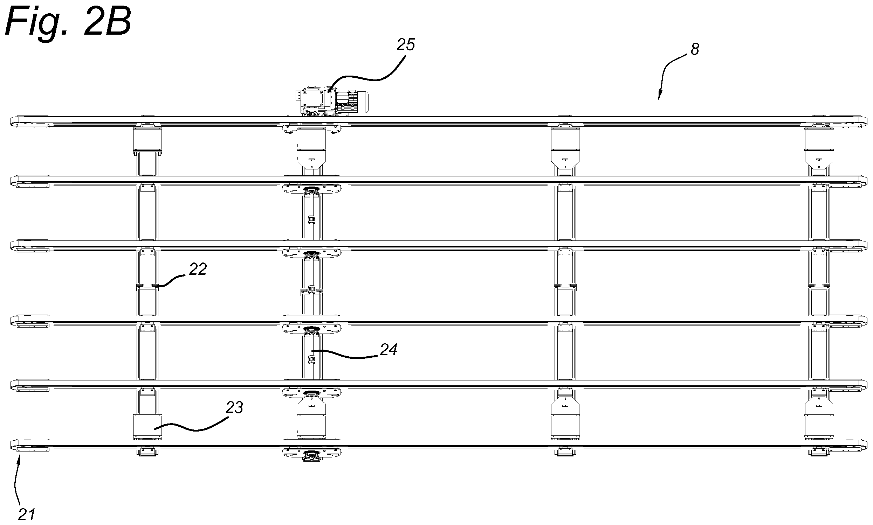

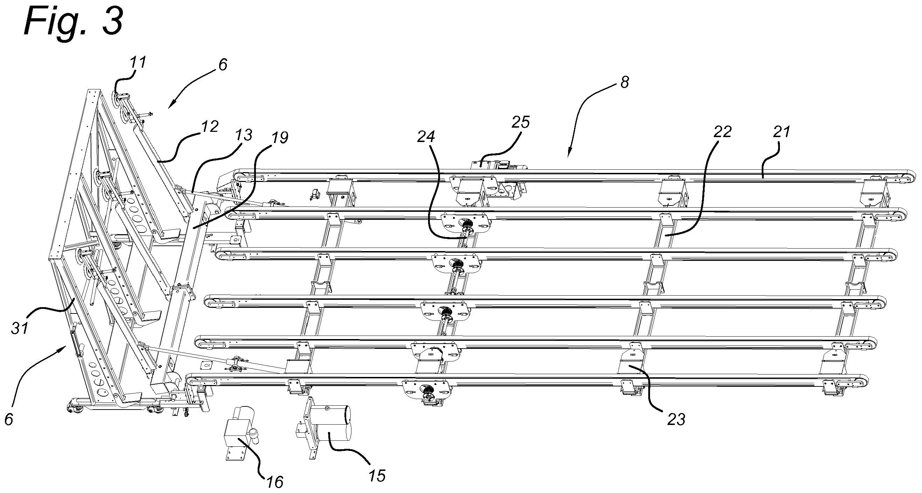

Figures 2a, 2b and 3 show schematic views of detailed loading and transport systems that could be used in the table of Figure 1.

Figure 2a shows a schematic view of a loading system (6) with arms and suction cups. The loading system (6) has three arms (12). The loading system of Figure 2a comprises a bar or shaft (19) to which the arms (12) are secured. The arms (12) can be secured to the bar or shaft (19) by screws or any other means. The arms of the system are configured to carry out a tilting movement with respect to the bar or shaft (19) such that the arms are raised above said bar or shaft. The loading system (6) of Figure 2a comprises a hydraulic group (15). The hydraulic group (15) can actuate the arms (12) of the system to make them tilt. The hydraulic group is located at one of the ends of the loading system. The loading system (6) of Figure 2a comprises two cylinders (13) located at the arms (12) of the ends to exert a force on these and thereby raise them. Each of the cylinders (13) is placed on one of the arms (12) of the ends. Each of the arms (12) of the loading system (6) of Figure 2a comprises two suction cups (11) that will adhere to a glass plate and thereby hold it on the arm (12). The loading system (6) of Figure 2a comprises a group (16) connected to the suction cups (11) that creates a vacuum in the suction cups when the arms are vertical so that they adhere to the surface of a glass plate and grip it. Once the arms have finished loading a glass plate on the table and are in a horizontal position, the suction cups can blow air to help the suction cups release from the surface of the glass plate. The arms (12) of the loading system (6) of Figure 2a comprise on the bottom part removable support points (14) for loading or unloading a glass plate. For example, the removable support points (14) can be used to load or unload a glass plate that due to its size cannot be gripped by the suction cups (11).

Figure 2b shows a schematic representation of a transport system (8) by belts. The number of belts in the system is six.

The belts (21) of the transport system (8) of Figure 2b comprise a plate (22) that keeps all the belts (21) together. The pneumatic cylinders (23) or any other system used in its place can exert their action on the plates (22) or on any other system that connects all the belts, such that when the plate or the system joining the belts is raised, all the belts rise simultaneously. Each plate can be raised using two cylinders. The cylinders are located at the ends of the plates.

The transport system (8) of Figure 2b comprises a hollow-shaft geared motor (25) to move the belts (21). The transport system (8) of Figure 2b comprises a shaft (24) that crosses all the belts.

The hollow-shaft geared motor turns the shaft (24) thereby moving the belts (21). Thus, the movement of all the belts (21) is simultaneous and fully synchronised.

Figure 3 shows a schematic view of a loading and transport system composed of the combination of the loading system (6) with arms and suction cups of Figure 2a and the transport system (8) by belts of Figure 2b. In Figure 3 the same reference numbers have been used as in Figures 2a and 2b for identical elements.

The loading and transport system of Figure 3 also shows an external loader (31) of glass plates that supplies a glass plate to the glass plate loading system (6). The external loader (31) in this case is a mobile rack that supplies a glass plate in a vertical or inclined position to the loading system (6) such that the tilting arms (12) receive it when they are placed in a vertical position. The tilting arms (12) can be adhered to the glass plate by the suction cups (11) or hold the same using the support points (14). The tilting arms (12) can therefore tilt with the glass plate to a horizontal position and deposit the glass plate in this horizontal position. The loading and transport system of Figure 3 also shows the transport system (8) of Figure 2b.

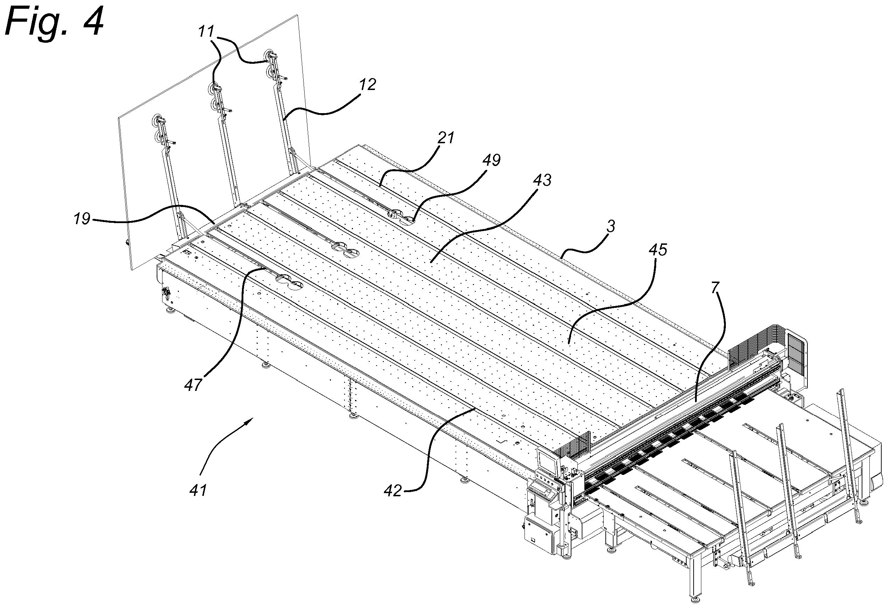

Figure 4 shows a view of a loading and processing table incorporating the system of Figure 3. In Figure 4 the same reference signs have been used as in Figures 2a and 2b for identical elements.

The processing table (41) of Figure 4 comprises a surface (3) for holding glass plates in a horizontal position with respect to the surface (3). The surface (3) of the table (41) in turn comprises a loading area (43) and a processing area (45).

The loading area (43) can receive a glass plate in a horizontal position. The glass plate is received by the loading area (43) from outside the processing table (41). The table comprises a mobile cutting head. The processing area can be defined by the area to which the cutting head has access. The table also comprises a mobile bridge. The processing area can be defined by the area that the mobile bridge can access. The table can process a glass plate with a maximum length of 3210 millimetres. The table surface can simultaneously fit two plates with dimensions of 3210 mm x 2550 mm. The table is over 6 metres long. A glass plate can be prepared previously in a vertical position with respect to the surface (3). The loading system of the processing table (41) receives the glass plate in a vertical position and places it in a horizontal position on the surface of the table in the loading area. The glass plate is received from a rack such as that shown in Figure 3. The processing table comprises three tilting arms (12) for receiving the glass plate in a vertical position and depositing it on the surface of the table in the loading area in a horizontal position. The processing table comprises a shaft or rod (19) attached at one of its sides. The arms (12) are attached to the rod or shaft (19) by screws or any other means of attachment. The arms of the system can perform a tilting motion with respect to the rod or shaft (19) such that the arms move up or down. The arms can tilt by means of a hydraulic group or any suitable device that moves them between a vertical position in which they protrude out of the surface of the table to receive a glass plate from the outside and a horizontal position in which the arms are concealed or semi-concealed under the surface of the table. The table comprises on its surface grooves (47) that emerge from the base or shaft (13) and follow the longitudinal axis of the table. The arms can be concealed or semi-concealed inside the grooves (47). Each arm (12) comprises two suction cups (11) for holding the glass plate when it is received in a vertical position. Each groove (47) comprises two openings (49) located at the end of the grooves farthest from the base or shaft such that when the arms tilt from a vertical position to a horizontal position to be concealed in the surface of the table, the openings will coincide with the suction cups such that these are also concealed inside the surface of the table. The table in turn comprises six belts (21) for transporting the glass plate from the loading area (43) to the processing area (45). The belts can move up and down from grooves (42) that are also longitudinal to the surface of the table, such that when the belts move up they are on the surface of the table in order to transport a glass plate from the loading area to the processing area, and when the belts move down they are concealed under the surface of the table to allow a glass plate to rest directly on the surface of the table. When the belts move up they can be driven by a motor or the like such that they can transport a glass plate from the loading area to the processing area. The arm has three arms and six belts arranged such that on one end of the table is a belt, followed by an arm, followed by two belts, followed by another arm, followed by another two belts, followed by another arm and finally on the opposite end of the table another belt. In this way the arms and belts can move up and down without interfering with each other.

The table has an unloading area for evacuating the glass from the table to the outside. The transport system (8) is also used to evacuate the glass plates from the table.

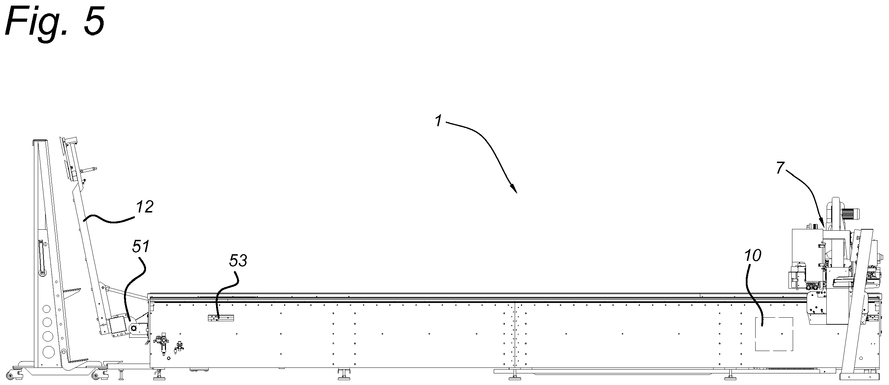

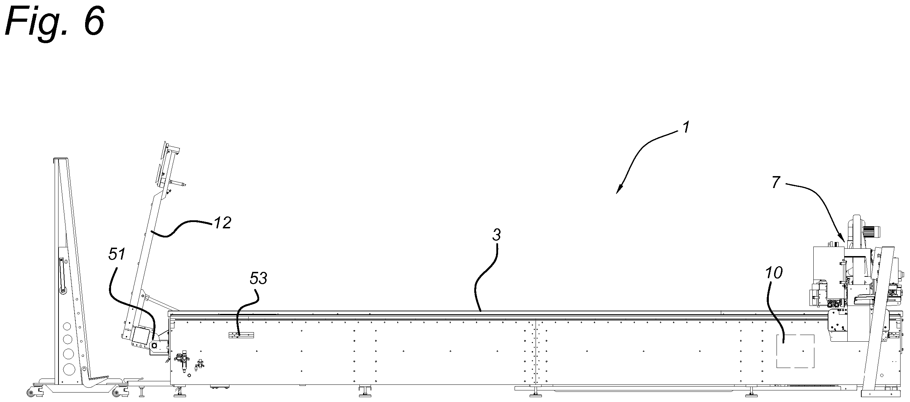

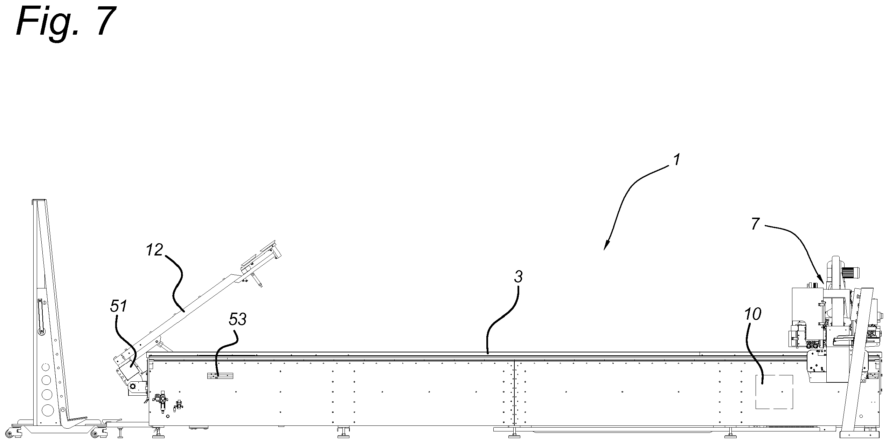

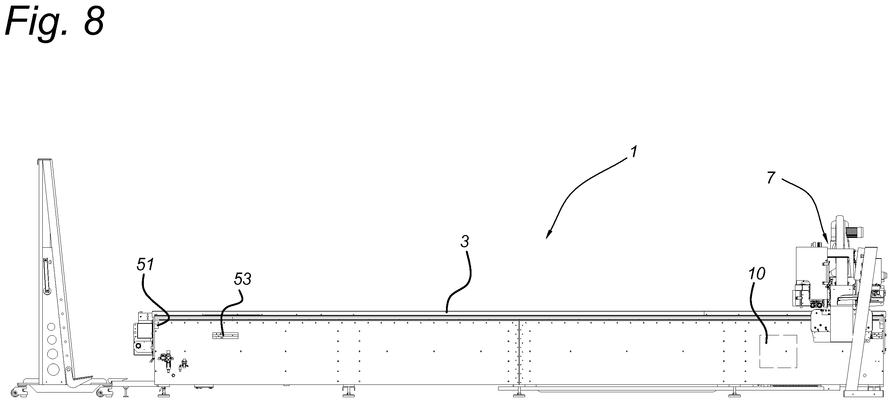

Figures 5-8 show side perspective views of the processing table of figure 4. The same numerical reference signs have been used as in the previous figures in order to designate the same elements. Figures 5-8 show how the arms (12) move down from the vertical position in Figure 5 to the horizontal position in Figure 8, where the arms are concealed inside the surface of the table. The processing table of Figures 5-8 comprises adjustable stops (51), such that the stops (51) can be placed in different positions such that the longitudinal distance that the bridge can move along the table depends on the position of the stops. The processing table of Figures 5-8 also comprises a control unit (10), metal plates (53) and inductors located inside the processing bridge (7) such that the inductors can detect the metal plates and at this time send a signal to the control unit. In this way, the control unit can detect that the bridge has reached a specific position above the surface of the table and can control its movement according to this position. The metal plates are adjustable and can be placed at different positions such that the longitudinal distances detectable along the table will depend on the position of the metal plates. Thus, the metal plates can be placed in the appropriate position to limit the movement of the mobile bridge along the table surface. For example, the metal plates can be placed in the middle of the length of the table or at its end. The control unit can be configured to slow down or stop the movement of the processing bridge when the bridge is at a specific position. For example, the control unit can slow down the processing bridge when the latter is at a first position and stop said bridge when it is in a second position.

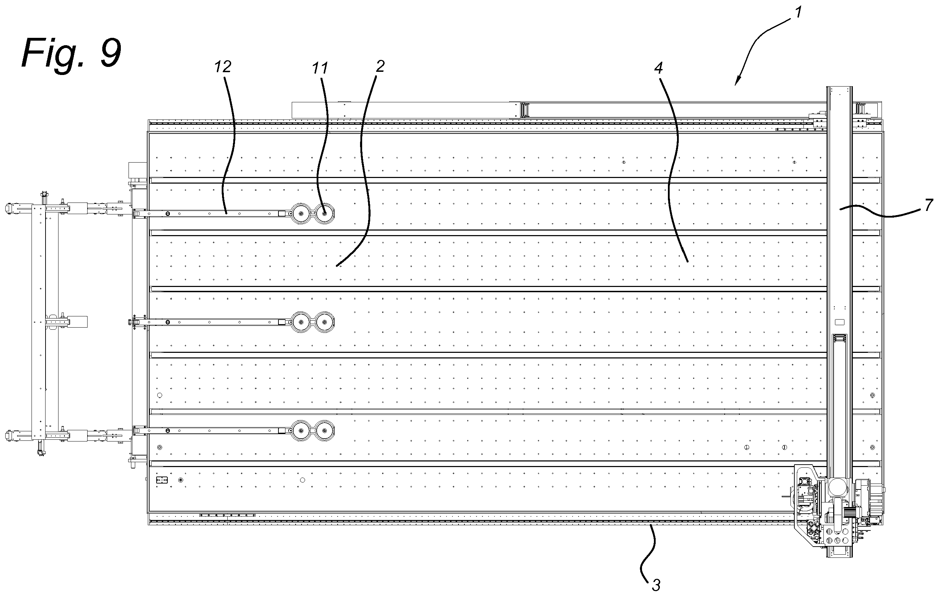

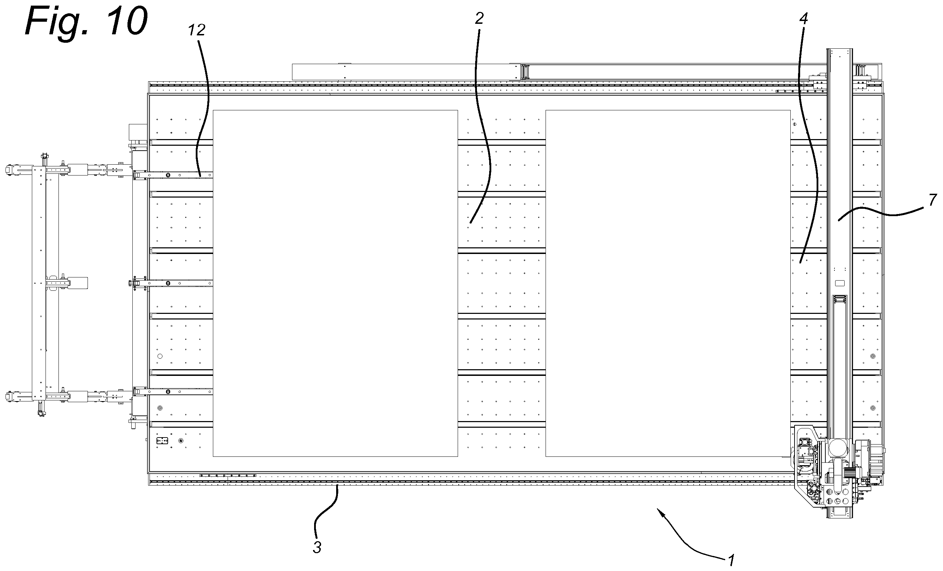

Figures 9-10 show plan views of the processing table of Figure 4. Figure 10 shows the table supporting two glass plates on its surface. A first glass plate is at the processing area to be processed and a second glass plate is at the loading area waiting to be transported to the processing area when the first glass plate has been evacuated from the table.

Two plates with dimensions of 3210 mm x 2550 mm can be placed on the surface of the table simultaneously. Initially there is no plate loaded on the table, such that the process is as follows:
1. The arms with suction cups are used to load the first plate on the table.
2. Once loaded, the transport belts carry the plate to the zero point of the table or the cutting or processing position.
3. While this plate is being marked, stripped, cut and/or any other process is being performed, the next plate is loaded on the table using the arms such that there are two plates on the surface of the table simultaneously.
4. When cutting is completed on the first plate, the plate will be evacuated by the belts.
5. While the first plate is being evacuated, the second plate is placed in the cutting area.
6. A new plate is placed on the table in the standby position.
7. This process is repeated as many times as there are plates to be processed.

As can be seen, the table can always have two plates on it. The plate being processed and the next plate. In this way, when a plate must be processed it will already be loaded on the table, thereby reducing dead loading times.

## Claims

1. Table (1) for loading and processing glass plates, wherein the table comprises:
a surface (3) for supporting glass plates in a horizontal position comprising a loading area (2) and a processing area (4);
a glass plate loading system (6) for receiving a glass plate from out of the table and placing said glass plate in a horizontal position at the loading area;
a glass plate transportation system (8) for transporting a glass plate from the loading area to the processing area;
a glass plate processing system (7) for processing a glass plate in the processing area; and
a glass plate evacuation system (9) for evacuating a glass plate from the table after passing through the processing area,
where the processing system comprises a mobile processing head and a mobile bridge, where the mobile processing head is mounted on the mobile bridge, the mobile bridge spans the width of the table and can move along the length of the table, the mobile processing head is configured to move along the mobile bridge, and the processing area (4) is defined by the area in which the processing head can move;
and wherein the table further comprises an adjustable stopping system configured to restrict the movement of the mobile bridge along the length of the table, wherein the adjustable stopping system can be adjusted to restrict said movement to the processing area or to the loading area or to allow the bridge to move along the entire table.

2. The table for loading and processing glass plates according to claim 1, **characterised in that** the table has a total length 1 and the loading area (2) has a length equal to or greater than one third of the total length 1 of the table.

3. The table for loading and processing glass plates according to any of the preceding claims, **characterised in that** the table has a length equal to or greater than 6 metres.

4. The table for loading and processing glass plates according to any of the preceding claims, **characterised in that** the glass plate loading system (6) comprises a tilting arm (12) for loading a glass plate in the loading area (2) where the tilting arm can tilt between a first position in which the tilting arm is in a vertical position to receive a glass plate and a second position in which the tilting arm is in a horizontal position for depositing a glass plate on the loading area.

5. The table for loading and processing glass plates according to claim 4, **characterised in that** the glass plate loading system comprises a hydraulic group (15) for tilting the tilting arm between the first and the second position, where in the second position the arm is concealed under the surface (3) of the table.

6. The table for loading and processing glass plates according to any of the preceding claims, **characterised in that** the glass plate transportation system (8) comprises a belt (21) for transporting a glass plate from the loading area (2) to the processing area (4).

7. The table for loading and processing glass plates according to claim 6, **characterised in that** the belt comprises mechanical means (23) for raising and lowering the belt such that it moves between a position in which the belt is concealed under the surface of the table and a position in which the belt is placed on the surface of the table.

8. The table for loading and processing glass plates according to claim 6, **characterised in that** the glass plate transportation system comprises a plurality of belts and a joining system (22) for joining all the belts such that if the mechanical means (23) exert a force on the joining system, then the plurality of belts rises or descends at the same time.

9. The table for loading and processing glass plates according to claim 5, **characterised in that** the glass plate transportation system comprises a plurality of belts, a shaft (24) that crosses the plurality of belts, and a motor (25) arranged to exert its force on the shaft such that the plurality of belts is able to move in a synchronised and simultaneous manner to transport a glass plate from the loading area to the processing area.

10. The table for loading and processing glass plates according to claim 9, where the belts and the arms are arranged in alternating positions on the surface of the table.

11. A system for loading and processing glass plates comprising a table for loading and processing glass plates according to any of claims 1-10, and an external glass plate loading system (31) for supplying a glass plate in a vertical position to the glass plate loading system of the table.

12. Method for loading and processing glass plates on a table for loading and processing glass plates, which comprises a loading area, a processing area, a processing system comprising a mobile processing head and a mobile bridge, where the mobile processing head is mounted on the mobile bridge, the mobile bridge spans the width of the table and is configured to move along the length of the table, the mobile processing head is configured to move along the mobile bridge, and the processing area is defined by the area in which the processing head can move, wherein the table further comprises an adjustable stopping system configured to restrict the movement of the mobile bridge along the length of the table wherein the adjustable stopping system can be adjusted to restrict said movement to the processing area or to the loading area or to allow the bridge to move along the entire table, and wherein the method comprises the following steps:
- Loading a glass plate in a horizontal position on the loading area using a glass plate loading system,
- Moving the glass plate from the loading area to the processing area using a glass plate transportation system,
- Processing the glass plate using a glass plate processing system, and
- While the glass plate is being processed, loading a glass plate in a horizontal position on the loading area using a glass plate loading system.

## Patentansprüche

1. Tisch (1) zum Verladen und Verarbeiten von Glasplatten, wobei der Tisch aufweist:
eine Fläche (3) zum Tragen von Glasplatten in einer horizontalen Position, die einen Ladebereich (2) und einen Verarbeitungsbereich (4) aufweist;
ein Glasplattenladesystem (6) zum Erhalten einer Glasplatte von außerhalb des Tisches und Platzieren der Glasplatte in einer horizontalen Position auf dem Ladebereich;
ein Glasplattentransportsystem (8) zum Transportieren einer Glasplatte von dem Ladebereich zu dem Verarbeitungsbereich;
ein Glasplattenverarbeitungssystem (7) zum Verarbeiten einer Glasplatte in dem Verarbeitungsbereich; und
ein Glasplattenabtransportiersystem (9) zum Abtransportieren einer Glasplatte von dem Tisch nach Durchlaufen des Verarbeitungsbereichs,
wobei das Verarbeitungssystem einen mobilen Verarbeitungskopf und eine mobile Brücke aufweist, wobei der mobile Verarbeitungskopf an der mobilen Brücke befestigt ist, die mobile Brücke sich über die Breite des Tisches erstreckt und sich entlang der Länge des Tisches bewegen kann, der mobile Verarbeitungskopf ausgestaltet ist, sich entlang der mobilen Brücke zu bewegen und der Verarbeitungsbereich (4) durch den Bereich definiert ist, in dem sich der Verarbeitungskopf bewegen kann;
und wobei der Tisch weiter ein einstellbares Anhaltesystem aufweist, das ausgestaltet ist, die Bewegung der mobilen Brücke entlang der Länge des Tisches zu begrenzen, wobei das einstellbare Anhaltesystem eingestellt werden kann, die Bewegung auf den Verarbeitungsbereich oder auf den Ladebereich zu begrenzen oder der Brücke zu ermöglichen, sich entlang des gesamten Tisches zu bewegen.

2. Tisch zum Verladen und Verarbeiten von Glasplatten gemäß Anspruch 1, **dadurch gekennzeichnet, dass** der Tisch eine Gesamtlänge I hat und der Ladebereich (2) eine Länge gleich oder größer als ein Drittel der Gesamtlänge I des Tisches hat.

3. Tisch zum Verladen und Verarbeiten von Glasplatten gemäß einem der vorhergehenden Ansprüche, **dadurch gekennzeichnet, dass** der Tisch eine Länge gleich oder größer als 6 Meter hat.

4. Tisch zum Verladen und Verarbeiten von Glasplatten gemäß einem der vorhergehenden Ansprüche, **dadurch gekennzeichnet, dass** das Glasplattenladesystem (6) einen Schwenkarm (12) zum Verladen einer Glasplatte in den Ladebereich (2) aufweist, wobei der Schwenkarm zwischen einer ersten Position, in der der Schwenkarm in einer vertikalen Position ist, um eine Glasplatte zu erreichen, und einer zweiten Position, in der der Schwenkarm in einer horizontalen Position ist, um eine Glasplatte auf den Ladebereich zu versetzen, schwenken kann.

5. Tisch zum Verladen und Verarbeiten von Glasplatten gemäß Anspruch 4, **dadurch gekennzeichnet, dass** das Glasplattenladesystem eine hydraulische Gruppe (15) zum Schwenken des Schwenkarms zwischen der ersten und der zweiten Position aufweist, wobei der Arm in der zweiten Position unter der Fläche (3) des Tisches verborgen ist.

6. Tisch zum Verladen und Verarbeiten von Glasplatten gemäß einem der vorhergehenden Ansprüche, **dadurch gekennzeichnet, dass** das Glasplattentransportsystem (8) ein Transportband (21) zum Transportieren einer Glasplatte von dem Ladebereich (2) zu dem Verarbeitungsbereich (4) aufweist.

7. Tisch zum Verladen und Verarbeiten von Glasplatten gemäß Anspruch 6, **dadurch gekennzeichnet, dass** das Transportband mechanische Mittel (23) zum Anheben und Senken des Transportbandes aufweist, so dass es sich zwischen einer Position, in der das Transportband unter der Fläche des Tisches verborgen ist, und einer Position, in der das Transportband auf der Fläche des Tisches platziert ist, bewegt.

8. Tisch zum Verladen und Verarbeiten von Glasplatten gemäß Anspruch 6, **dadurch gekennzeichnet, dass** das Glasplattentransportsystem eine Vielzahl von Transportbändern und ein Zusammenführungssystem (22) zum Zusammenführen aller der Transportbänder aufweist, so dass, wenn die mechanischen Mittel (23) eine Kraft auf das Zusammenführungssystem aufbieten, sich die Vielzahl von Transportbändern zur selben Zeit anhebt oder absenkt.

9. Tisch zum Verladen und Verarbeiten von Glasplatten gemäß Anspruch 5, **dadurch gekennzeichnet, dass** das Glasplattentransportsystem eine Vielzahl von Transportbändern, eine Achse (24), die die Vielzahl von Transportbändern kreuzt, und einen Motor (25), der ausgerichtet ist, seine Kraft auf die Achse aufzubieten, aufweist, so dass die Vielzahl von Transportbändern im Stande ist, sich in einer synchronen und simultanen Art und Weise zu bewegen, um eine Glasplatte von dem Ladebereich zu dem Verarbeitungsbereich zu transportieren.

10. Tisch zum Verladen und Verarbeiten von Glasplatten gemäß Anspruch 9, wobei die Transportbänder und die Arme in wechselnden Positionen auf der Fläche des Tischs ausgerichtet sind.

11. System zum Verladen und Verarbeiten von Glasplatten, das einen Tisch zum Verladen und Verarbeiten von Glasplatten gemäß einem der Ansprüche 1 bis 10 aufweist und ein externes Glasplattenladesystem (31) zum Tragen einer Glasplatte in einer vertikalen Position zu dem Glasplattenladesystem des Tisches.

12. Verfahren zum Verladen und Verarbeiten von Glasplatten auf einem Tisch zum Verladen und Verarbeiten von Glasplatten, der einen Ladebereich, einen Verarbeitungsbereich und ein Verarbeitungssystem aufweist, das einen mobilen Verarbeitungskopf und eine mobile Brücke aufweist, wobei der mobile Verarbeitungskopf an der mobilen Brücke befestigt ist, die mobile Brücke sich über die Breite des Tisches erstreckt und ausgestaltet ist, sich entlang der Länge des Tisches zu bewegen, der mobile Verarbeitungskopf ausgestaltet ist, sich entlang der mobilen Brücke zu bewegen, und der Verarbeitungsbereich durch den Bereich definiert ist, in dem sich der Verarbeitungskopf bewegen kann, wobei der Tisch weiter ein einstellbares Anhaltesystem aufweist, das ausgestaltet ist, die Bewegung der mobilen Brücke entlang der Länge des Tisches zu begrenzen, wobei das einstellbare Anhaltesystem eingestellt werden kann, die Bewegung auf den Verarbeitungsbereich oder den Ladebereich zu begrenzen oder der Brücke zu ermöglichen, sich entlang des gesamten Tisches zu bewegen, und wobei das Verfahren die folgenden Schritte aufweist:
- Verladen einer Glasplatte in eine horizontale Position auf den Ladebereich unter Verwendung eines Glasplattenladesystems,
- Bewegen der Glasplatte von dem Ladebereich zu dem Verarbeitungsbereich unter Verwendung eines Glasplattentransportsystems,
- Verarbeiten der Glasplatte unter Verwendung eines Glasplattenverarbeitungssystems, und
- während die Glasplatte verarbeitet wird, Verladen einer Glasplatte in einer horizontalen Position auf den Ladebereich unter Verwendung eines Glasplattenladesystems.

## Revendications

1. Table (1) pour charger et traiter des plaques de verre, dans laquelle la table comprend :
une surface (3) pour supporter des plaques de verre dans une position horizontale comprenant une zone de chargement (2) et une zone de traitement (4) ;
un système de chargement de plaque de verre (6) pour recevoir une plaque de verre depuis l'extérieur de la table et placer ladite plaque de verre dans une position horizontale au niveau de la zone de chargement ;
un système de transport de plaque de verre (8) pour transporter une plaque de verre de la zone de chargement à la zone de traitement ;
un système de traitement de plaque de verre (7) pour traiter une plaque de verre dans la zone de traitement ; et
un système d'évacuation de plaque de verre (9) pour évacuer une plaque de verre à partir de la table après passage à travers la zone de traitement,
où le système de traitement comprend une tête de traitement mobile et un pont mobile, où la tête de traitement mobile est montée sur le pont mobile, le pont mobile s'étend sur la largeur de la table et peut se déplacer sur la longueur de la table, la tête de traitement mobile est configurée pour se déplacer le long du pont mobile, et la zone de traitement (4) est définie par la zone dans laquelle la tête de traitement peut se déplacer ;
et dans laquelle la table comprend en outre un système d'arrêt ajustable configuré pour restreindre le déplacement du pont mobile sur la longueur de la table, dans laquelle le système d'arrêt ajustable peut être ajusté pour restreindre ledit déplacement à la zone de traitement ou à la zone de chargement ou pour permettre au pont de se déplacer le long de la table entière.

2. Table pour charger et traiter des plaques de verre selon la revendication 1, **caractérisée en ce que** la table présente une longueur totale 1 et la zone de chargement (2) présente une longueur égale ou supérieure à un tiers de la longueur totale 1 de la table.

3. Table pour charger et traiter des plaques de verre selon l'une quelconque des revendications précédentes, **caractérisée en ce que** la table présente une longueur égale ou supérieure à 6 mètres.

4. Table pour charger et traiter des plaques de verre selon l'une quelconque des revendications précédentes, **caractérisée en ce que** le système de chargement de plaque de verre (6) comprend un bras basculant (12) pour charger une plaque de verre dans la zone de chargement (2), où le bras basculant peut basculer entre une première position dans laquelle le bras basculant est dans une position verticale pour recevoir une plaque de verre et une seconde position dans laquelle le bras basculant est dans une position horizontale pour déposer une plaque de verre sur la zone de chargement.

5. Table pour charger et traiter des plaques de verre selon la revendication 4, **caractérisée en ce que** le système de chargement de plaque de verre comprend un groupe hydraulique (15) pour basculer le bras basculant entre la première et la seconde position, où dans la seconde position, le bras est caché sous la surface (3) de la table.

6. Table pour charger et traiter des plaques de verre selon l'une quelconque des revendications précédentes, **caractérisée en ce que** le système de transport de plaque de verre (8) comprend une courroie (21) pour transporter une plaque de verre de la zone de chargement (2) à la zone de traitement (4).

7. Table pour charger et traiter des plaques de verre selon la revendication 6, **caractérisée en ce que** la courroie comprend des moyens mécaniques (23) pour lever et abaisser la courroie de sorte qu'elle se déplace entre une position dans laquelle la courroie est cachée sous la surface de la table et une position dans laquelle la courroie est placée sur la surface de la table.

8. Table pour charger et traiter des plaques de verre selon la revendication 6, **caractérisée en ce que** le système de transport de plaque de verre comprend une pluralité de courroies et un système d'assemblage (22) pour assembler toutes les courroies de telle sorte que si les moyens mécaniques (23) exercent une force sur le système d'assemblage, alors la pluralité de courroies montent ou descendent en même temps.

9. Table pour charger et traiter des plaques de verre selon la revendication 5, **caractérisée en ce que** le système de transport de plaque de verre comprend une pluralité de courroies, un arbre (24) qui croise la pluralité de courroies, et un moteur (25) agencé pour exercer sa force sur l'arbre de telle sorte que la pluralité de courroies sont capables de se déplacer d'une manière synchronisée et simultanée pour transporter une plaque de verre de la zone de chargement à la zone de traitement.

10. Table pour charger et traiter des plaques de verre selon la revendication 9, dans laquelle les courroies et les bras sont agencés dans des positions alternées sur la surface de la table.

11. Système pour charger et traiter des plaques de verre comprenant une table pour charger et traiter des plaques de verre selon l'une quelconque des revendications 1 à 10, et un système de chargement de plaque de verre externe (31) pour fournir une plaque de verre dans une position verticale au système de chargement de plaque de verre de la table.

12. Procédé pour charger et traiter des plaques de verre sur une table pour charger et traiter des plaques de verre, qui comprend une zone de chargement, une zone de traitement, un système de traitement comprenant une tête de traitement mobile et un pont mobile, où la tête de traitement mobile est montée sur le pont mobile, le pont mobile s'étend sur la largeur de la table et est configuré pour se déplacer le long de la longueur de la table, la tête de traitement mobile est configurée pour se déplacer le long du pont mobile, et la zone de traitement est définie par la zone dans laquelle la tête de traitement peut se déplacer, dans lequel la table comprend en outre un système d'arrêt ajustable configuré pour restreindre le déplacement du pont mobile le long de la longueur de la table, dans lequel le système d'arrêt ajustable peut être ajusté pour restreindre ledit déplacement à la zone de traitement ou à la zone de chargement ou pour permettre au pont de se déplacer le long de la table entière, et dans lequel le procédé comprend les étapes suivantes consistant à :
- charger une plaque de verre dans une position horizontale sur la zone de chargement à l'aide d'un système de chargement de plaque de verre,
- déplacement la plaque de verre de la zone de chargement à la zone de traitement à l'aide d'un système de transport de plaque de verre,
- traiter la plaque de verre à l'aide d'un système de traitement de plaque de verre, et
- pendant le traitement de la plaque de verre, charger une plaque de verre dans une position horizontale sur la zone de chargement à l'aide d'un système de chargement de plaque de verre.
